# EUROPEAN PATENT SPECIFICATION

(11) **EP 2 291 029 B1**
(45) Date of publication and mention of the grant of the patent: **28.08.2013**
(21) Application number: 09761292.3
(22) Date of filing: 12.06.2009
(51) Int. Cl.: H04W 76/02, H04L 29/06, H04W 88/06, H04W 48/18

(54) **ICS UE terminating sessions using CS media**
Verbindungen zu einem ICS UE unter Nutzung von CS media
Terminer des sessions à une ICS UE en utilisant CS média

(30) Priority: 13.06.2008 CN 200810110176
(43) Date of publication of application: 02.03.2011
(73) Proprietor: Huawei Technologies Co., Ltd., Longgang District, Shenzhen Guangdong 518129 (CN)
(72) Inventor: DUAN, Xiaoyan, Guangdong 518129 (CN); LONG, Shuiping, Guangdong 518129 (CN); JIN, Hui, Guangdong 518129 (CN)
(74) Representative: Epping - Hermann - Fischer
(86) International application number: PCT/CN2009/072242
(87) International publication number: WO 2009/149667

(56) References cited:
- CN-A- 1 728 876
- CN-A- 1 832 618
- CN-A- 101 138 211
- US-A1- 2005 195 815
- US-A1- 2006 209 798
- 3GPP TS 23.292 V8.0.0 (2008-06): "3rd Generation Partnership Project; Technical Specification Group Services and System Aspects; IP Multimedia Subsystem (IMS) Centralized Services; Stage 2 (Release 8)", 3GPP STANDARD; 3GPP TS 23.292, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 1 June 2008 (2008-06-01), pages 1-89, XP050363557,
- HUAWEI: "S2-084917; Re-selection of access in ICS UE terminating session using Gm reference point", 3GPP DRAFT; S2-084917_DISCUSSION ON RE-SELECTION OF ACCESS IN ICS UE TERMINATING SESSION USING GM REFERENCE POINT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Montreal; 20080618, 18 June 2008 (2008-06-18), XP050267003, [retrieved on 2008-06-18]
- HUAWEI: "S2-084916; Re-selection of access in ICS UE terminating session using Gm reference point", 3GPP DRAFT; S2-084916_CR0030_RE-SELECTION OF ACCESS IN ICS UE TERMINATING SESSION USING GM REFERENCE POINT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Montreal; 20080618, 18 June 2008 (2008-06-18), XP050267002, [retrieved on 2008-06-18]
- NORTEL ET AL: "S2-075531; ADS for ICS users", 3GPP DRAFT; S2-075531R1 - ICS-TR-1-ADS FOR ICS USER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Ljubljana; 20071116, 16 November 2007 (2007-11-16), XP050262207, [retrieved on 2007-11-16]
- SAMSUNG ET AL: "S2-082191; ICS termination with UE assisted T-ADS in case of no simultaneous PS and CS support Spec: 3GPP TS 23.292", 3GPP DRAFT; S2-082191, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Jeju; 20080331, 31 March 2008 (2008-03-31), XP050264556, [retrieved on 2008-03-31]

## Description

### FIELD OF THE TECHNOLOGY

The present invention relates to the field of communications technologies, and more particularly to methods, an ICS UE, a SCC AS and systems for bearer establishment for a called party in an ICS network.

### BACKGROUND OF THE INVENTION

A communications network based on an IP multimedia subsystem (IMS) is considered as a core technology of the Next Generation Network (NGN) for integrating mobile and fixed networks, and supports multiple media like voice, video, and data, and combined services thereof. In the current IMS network, services are controlled by adopting an IP multimedia core network subsystem, and a IP-connectivity access network(IP-CAN), which acts as an access network, provides a bearer for signaling and media transmission. In this way, a service control network and a bearer network are separated, providing a uniform and flexible supporting platform for IP multimedia applications.

An IP multimedia subsystem centralized services (ICS) network is a general IMS network that adopts the IP multimedia core network subsystem to exercise centralized service control, and adopts a circuit switched (CS) network and a PS network as an access network (that is, the bearer network). Compared with the current IMS network, the ICS network breaks the limitation that IMS services can be accessed only through the PS network.

While maintaining the centralized control, exercised by the IP multimedia core network subsystem, over services, the ICS network further expands an IMS service bearer network to a conventional CS network.

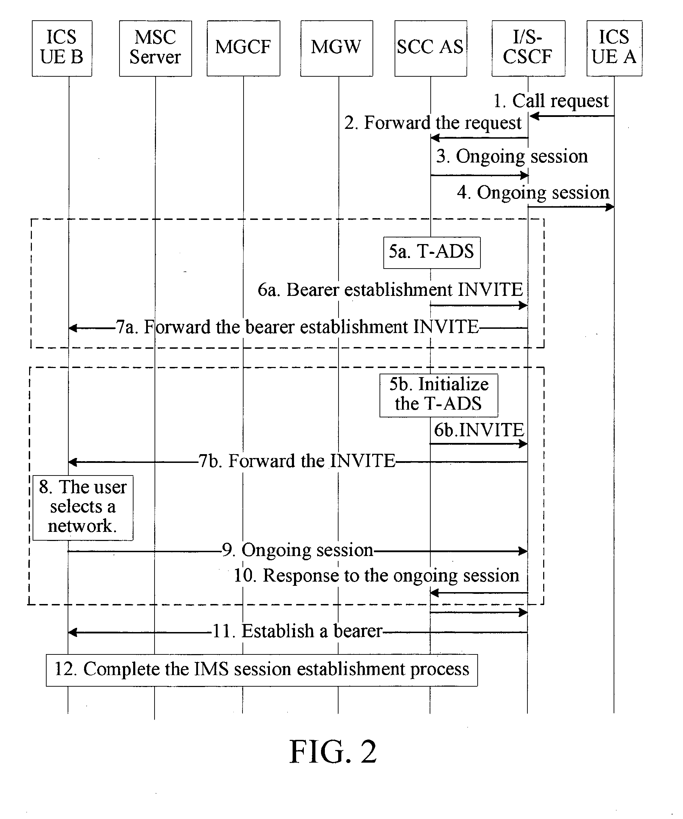

A current called flow of a user equipment (UE) based on a Gm reference point is as shown in FIG. 2, which specifically includes the following steps.

A network to which a called user belongs receives called information.

The network executes terminating access domain selection (T-ADS) to select an access network; or the user assists T-ADS to select an access network.

The called user performs a call bearing in the access network.

During the research, the inventors found that CS bearer establishment may fail in the call process in the following cases. For example, 1) the CS network is busy; and 2) when the UE just roams to an area beyond the coverage of the CS network or has not registered to the CS network that the UE just roamed to, a service centralization and continuity application server (SCC AS) executes T-ADS according to original access information (the SCC AS is asynchronous with the UE information), and falsely gives an instruction of establishing a bearer in the original CS domain. Similarly, if the SCC AS or the UE selects a PS access network to establish a bearer, PS bearer establishment may also fail (for example, in the case that the PS network is busy). In these situations, according to the prior art, the UE will notify the network that the call establishment fails, and release the call without other attempts.

Technical specification 3GPP TS 23.292 V8.0.0 titled "3rd Generation Partnership Project; Technical Specification Group Services and System Aspects; IF Multimedia Subsystem (IMS) Centralized Services; Stage 2 (Release 8)" specifies the architectural requirements for delivery of consistent IMS services to the user regardless of the attached access type.

Reference document US 2006/209798 A1 discloses a terminal device and method that re-establishes a circuit switched call or a packet switched connection in a data network having at least a first access network and a second access network. A failure of the circuit switched call or the packet switched connection established via the first access network is detected at the terminal device and connection re-establishment is initiated via the second access network in response to the result of checking registration to the second access network, if a failure has been detected. Thereby, a new option is provided to avoid connection failures when coverage to another access network is available, especially where call re-establishment via the first access network is not allowed.

### SUMMARY OF THE INVENTION

Accordingly, the present invention is directed to methods, an ICS UE, a SCC AS and systems for bearer establishment for a called party in an ICS network, so as to enable a ICS UE to change an access domain of the ICS UE and try accessing again when bearer establishment fails, thereby providing more guarantees for a successful call.

In order to achieve the above objective, the present invention provides the following technical solutions as defined in independent claims 1, 6, 12, 13, 14 and 16.

A method for bearer establishment for a called party in an IMS centralized service, ICS, network is provided, the called party being an ICS user equipment, ICS UE, the method includes the following steps:
receiving, by a service centralization and continuity application server, SCC AS, a message, which indicates that bearer establishment fails and is sent by the ICS UE;
executing, by the SCC AS, terminating access domain selection, T-ADS, to select a new access network for bearer establishment; and
sending, by the SCC AS, a message, which indicates information of the new access network for bearer establishment, to the ICS UE.

A method for bearer establishment for a called party in an IMS centralized service, ICS, network is provided, the called party being an ICS user equipment, ICS UE, the method includes the following steps:
when a current access network fails to establish a bearer, executing, by the ICS UE, terminating access domain selection, T-ADS, to select a new access network for bearer establishment; and
sending, by the ICS UE, a message, which indicates that a bearer needs to be established in the new access network for bearer establishment, to a service centralization and continuity application server, SCC AS

An IMS centralized service user equipment, ICS UE, is provided, and includes a notifying unit, a receiving unit, and an update access unit.

The notifying unit is configured to send a message, which indicates that bearer establishment fails, to a service centralization and continuity application server, SCC AS.

The receiving unit is configured to receive a message, which indicates information of a new access network for bearer establishment and is sent by the SCC AS.

The update access unit is configured to establish a bearer in the new access network for bearer establishment according to the message sent by the SCC AS.

An IMS centralized service user equipment, ICS UE, is provided, and includes a network selecting unit, a notifying unit, a receiving unit, and an update access unit.

The network selecting unit is configured to execute T-ADS when bearer establishment fails.

The notifying unit is configured to send a message, which indicates that a bearer needs to be established in a new access network for bearer establishment, to a service centralization and continuity application server, SCC AS.

The receiving unit is configured to receive an acknowledgement message from the SCC AS.

The update access unit is configured to establish a bearer in the new access network for bearer establishment.

A service centralization and continuity application server, SCC AS, is provided,
and includes a first receiving unit, an first executing unit, and a first sending unit.

The first receiving unit is configured to receive, in the case of a bearer establishment failure, a notification message, which indicates that bearer establishment fails and is sent by an IMS centralized service user equipment, ICS UE.

The first executing unit is configured to execute T-ADS to select a new access network for bearer establishment.

The first sending unit is configured to send an update message, which indicates information of the new bearer access network, to the ICS UE.

A service centralization and continuity application server, SCC AS, is provided, and includes a second receiving unit and a second sending unit.

The second receiving unit is configured to receive a notification message, which notifies to establish a bearer in a new access network for bearer establishment and is sent by an IMS centralized service user equipment, ICS UE, when the current access network fails to establish the bearer.

The second sending unit is configured to send an acknowledgement message to the ICS UE.

It can be clearly seen that, in the method of the present invention, a new access network for bearer establishment is selected when bearer establishment fails, and a bearer is established in the new access network for bearer establishment, which enables a called terminal to change an access domain of the called terminal and try accessing again when the bearer establishment fails, thereby providing more guarantees for a successful call.

### BRIEF DESCRIPTION OF THE DRAWINGS

FIG. 1 is a reference architecture of an ICS network in the prior art;
FIG. 2 is a signaling flow diagram of a call of a called UE based on a Gm reference point in the prior art;
FIG. 3 is a flow chart of a method according to a first embodiment of the present invention;
FIG. 4 is a flow chart of a method according to a second embodiment of the present invention;
FIG. 5 is a signaling flow diagram of a method according to a third embodiment of the present invention;
FIG. 6 is a signaling flow diagram of a method according to a fourth embodiment of the present invention;
FIG. 7 is a signaling flow diagram of a method according to a fifth embodiment of the present invention;
FIG. 8 is a flow chart of a method according to a sixth embodiment of the present invention;
FIG. 9 is a signaling flow diagram of a method according to a seventh embodiment of the present invention;
FIG. 10 is a schematic structural view of a first embodiment of a device according to the present invention;
FIG. 11 is a schematic structural view of a second embodiment of a device according to the present invention;
FIG. 12 is a schematic structural view of a third embodiment of a device according to the present invention;
FIG. 13 is a schematic structural view of a fourth embodiment of a device according to the present invention;
FIG. 14 is a schematic structural view of a first embodiment of a system according to the present invention; and
FIG. 15 is a schematic structural view of a second embodiment of a system according to the present invention.

### DETAILED DESCRIPTION OF THE EMBODIMENTS

The present invention provides a method, a device, and a system for the called party to access, which will be described in detail below by embodiments with reference to the accompanying drawings.

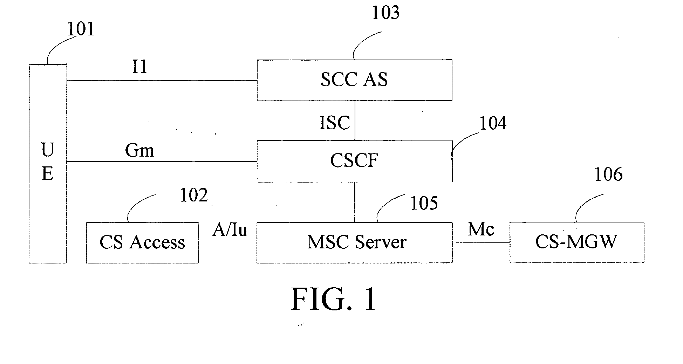

FIG. 1 is a reference architecture of an ICS network, which mainly includes an ICS UE 101, an SCC AS 103, a call session control function (CSCF) 104, a CS access network (CS Access) 102, a mobile-services switching center server (MSC server) 105, and a circuit switched-media gateway function (CS-MGW) 106.

The CSCF provides a core function of IMS session control, and can be divided into three types, P/S/I, according to position and function.

A proxy CSCF (P-CSCF) is a first connection point, connecting with the UE, in the IMS, and provides a proxy function, that is, accepting and forwarding a service request. The P-CSCF also provides a function of a user agent (UA), that is, interrupting and independently generating a Session Initiation Protocol (SIP) session under unusual situations.

A serving CSCF (S-CSCF) is at a core control status in the IMS core network, and is responsible for registration authentication and session control of the UE. The S-CSCF executes a basic session routing function aiming at IMS users of the calling terminal and the called terminal, and performs value-added routing trigger to the AS and service control interaction according to IMS triggering rules subscribed by the user when related conditions are satisfied.

An interrogating CSCF (I-CSCF) acts as a gateway contact point of the IMS, and provides functions of service contact point assignment for users in the local domain, route query, and topology hiding among IMS domains.

A media gateway control function (MGCF) realizes interaction between an IMS core control plane and a CS domain user plane, supports protocol interaction and call interconnection between ISUP/BICC and the SIP, and controls the MGW to complete real-time conversion between the CS bearer and the IMS domain RTP bearer through the H.248 protocol.

The CS-MGW implements bearer and necessary Codec conversion between the IMS and the CS domain user plane.

The MSC server realizes calling and called control functions of a CS domain mobile terminal. User-network signaling terminates at the MSC server, and is transformed into network-network signaling by the MSC server. The MSC server controls the CS-MGW to establish a CS domain media bearer.

Based on the existing IMS network, network entities and functions newly defined by the ICS mainly include SCC AS, ICS UE, and MSC server having an ICS service enhancing function.

The SCC AS is an application server that provides ICS service support, and executes core ICS service logic control. The SCC AS has a function of back-to-back user agent (B2BUA), that is, service control signaling and bearer control signaling (i.e., a Session Description Protocol, SDP) between a local terminal and the network are integrated into one control signaling in the SCC AS, and the SCC AS initiates a service and bearer establishment request to a remote terminal (a called user); and vice versa.

T-ADS is a main function module of the SCC AS. With the T-ADS, the SCC AS assists the S-CSCF to select an access network to access a call for the called terminal. T-ADS decision information includes access network information, terminal capability, registration status of the terminal in the CS domain (attached or unattached), registration status of the terminal in the PS domain (registered or unregistered), currently-activated session, operator policy, user preference, and other information.

The ICS UE is an IMS terminal having enhanced ICS capabilities, and the enhanced functions of the ICS UE mainly includes the followings.

Service control signaling is interacted between the ICS UE and the SCC AC; bearer control signaling and a bearer are established through the CS domain; ADS is executed when session establishment is initiated; and the ICS UE assists the SCC AS to execute T-ADS, that is, assists the T-ADS. The ICS UE is referred to as UE for short hereinafter.

The MSC server having the ICS service-enhancing function is configured to support an IMS terminal without enhanced ICS capabilities (Non-UE) to realize ICS services (the UE is not required to have such enhancements), and further has the following main functions: supporting the conversion between the CS domain user-network signaling and the IMS SIP signaling; controlling the MGW to realize the conversion between the CS access bearer and the RTP bearer; and supporting signaling conversion to realize an ICS multimedia session.

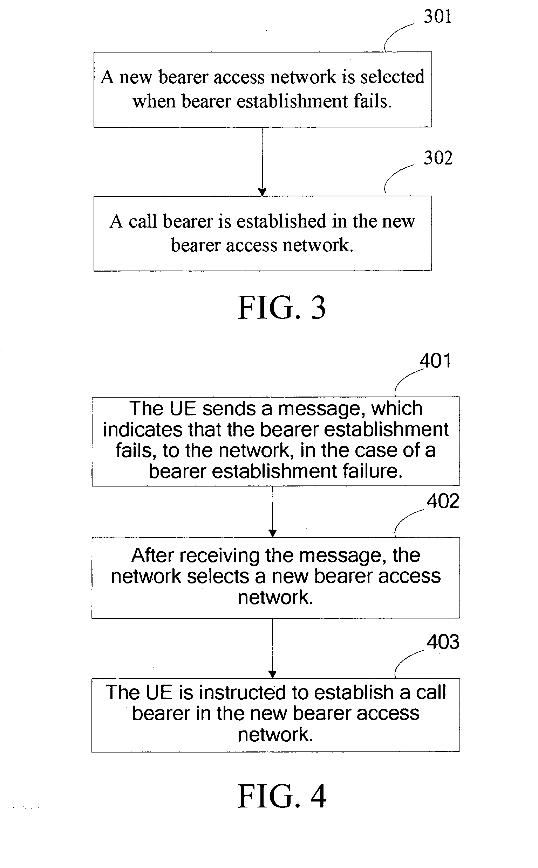

Referring to FIG. 3, the method for called access according to a first embodiment of the present invention includes the following steps.

In step 301, a new bearer access network is selected when a current called network side fails to establish a bearer.

In step 302, a call bearer is established in the new bearer access network.

In the existing call process, CS bearer establishment may fail in the following cases.

For example, 1) the CS network is busy; and 2) when the UE just roams to an area beyond the coverage of the CS network, or has not registered to the CS network that the UE just roamed to, the SCC AS executes T-ADS according to original access information (the SCC AS is asynchronous with the UE information), and falsely gives an instruction of establishing a bearer in the original CS domain. Similarly, if the SCC AS or the UE selects a PS access network to establish a bearer, PS bearer establishment may also fail (for example, in the case that the PS network is busy). In these situations, according to the prior art, the UE will notify the network that the call establishment fails, and release the call without other attempts.

Actually, however, since the UE has dual-mode (CS/PS) access capability, when the selected bearer network access fails, the other access network may still provide a bearer for the service. In this way, a successful call establishment is guaranteed, and unnecessary call establishment failure that affects the user experience is avoided.

In actual applications, the selecting the new bearer access network in step 301 may be accomplished in various manners. The embodiments of the present invention will be described in detail below with reference to the different manners.

In a second embodiment, after the network fails to establish a bearer, the user sends a bearer establishment failure indication to the network, and the network re-selects an access network. Referring to FIG. 4, the method according to this embodiment specifically includes the following steps.

In step 401, when a current called network side fails to establish a bearer, the UE sends a message, which indicates that the bearer establishment fails, to the network.

Since the UE has dual-mode (CS/PS) access capability, the network may be a CS or PS network. When bearer establishment in the CS network fails, it may be tried to re-establish a bearer in the PS network, and vice versa.

In step 402, after receiving the message, the network selects a new bearer access network.

After the network receives the failure indication, the selecting the new bearer access network is accomplished through T-ADS.

In step 403, the UE is instructed to establish a call bearer in the new bearer access network.

After step 402 or 403, the method further includes: updating T-ADS decision information of the network side.

The UE may notify the network that the bearer establishment fails with different messages according to actual demands. The embodiments of the present invention will be described in detail below with reference to the different messages.

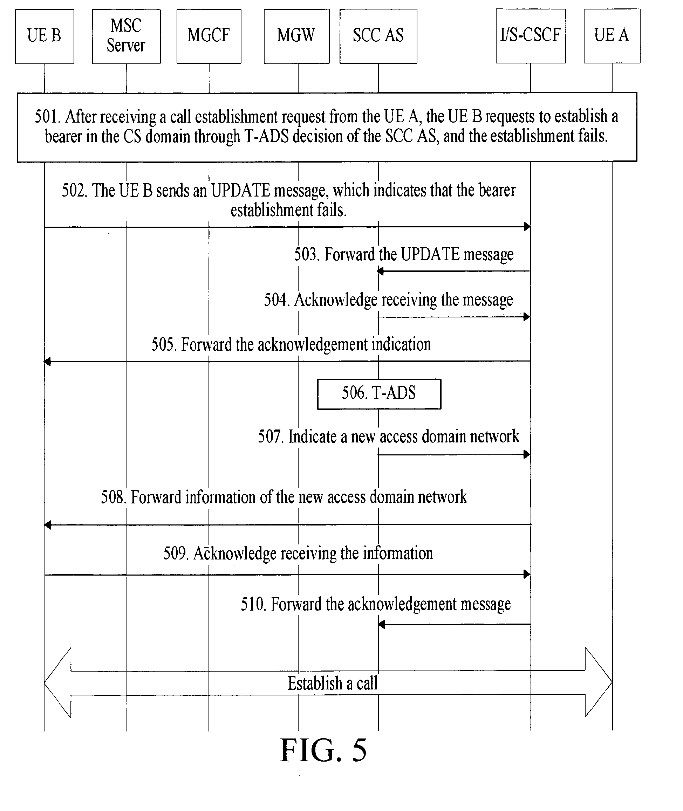

A third embodiment is provided by taking that the bearer establishment in the CS network fails as an example. The user sends an UPDATE message to indicate that the bearer establishment in the CS network fails. FIG. 5 is a signaling flow diagram of the method of this embodiment, which includes the following steps.

In step 501, after receiving a call from UE A, UE B attempts to establish a bearer in the CS domain through T-ADS decision of the SCC AS, and the bearer establishment fails.

Step 501 is the same as the called flow of the UE based on the Gm reference point in the prior art, which will not be described herein again.

In step 502, the UE B sends an UPDATE message, which indicates that the bearer establishment fails, to the I/S-CSCF.

The failure of the CS bearer establishment is indicated through SDP parameters.

The SDP defines a method for describing media information of a multimedia session. In the IMS system, the SDP is carried by SIP signaling as a message body, and realizes control over bearer establishment for an IMS session media stream. The information of media transmission in the SDP is mainly described by rows "c=" and "m=", where "c=" describes information of media connections, and "m=" describes the media name, transmission address, and other information.

For example, c=IN IP4 224.2.1.1 indicates that the media transmission is performed in the Internet (that is, a PS network), the address type is IPv4, and the address is 224.2.1.1. c=PSTN - - indicates that the media transmission is performed in the CS network, and the address type and the connection address are unknown. m=video 49170 RTP/AVP 31 indicates that video media are transmitted, the transmission port is 49170, the RTP/AVP transmission protocol is adopted, and the format number is 31.

In step 503, the I/S-CSCF forwards the UPDATE message to the SCC AS.

In step 504, the SCC AS sends an UPDATE acknowledgement message to the I/S-CSCF.

In step 505, the I/S-CSCF forwards the acknowledgement message from the SCC AS to the UE B.

In step 506, the SCC AS re-executes T-ADS to select a PS access network to establish a call bearer.

Since the UE has dual-mode (CS/PS) access capability, when the CS network access fails, the PS network may be tried, and at the same time, the SCC AS may, for example, according to operator policy requirements, update T-ADS decision information of the network. The selected PS access network may be the current PS access network (that is, the PS network for signaling transmission) or other PS access networks.

In step 507, the SCC AS sends the UPDATE message to the I/S-CSCF to indicate a new access network.

The UE B is instructed by using the SDP parameters to establish a call bearer through the PS network, for example,
c=IN IP6 3ffe:501:ffff:1::1
m=audio 3456 RTP/AVP 0.

In step 508, the I/S-CSCF forwards information of the new access domain network.

In step 509, after receiving the UPDATE message, the UE B sends an acknowledgement message to the I/S-CSCF.

In step 510, the I/S-CSCF forwards the acknowledgement message.

After step 510, if the call bearer establishment in the new access network (PS network) is successful, the UE B continues to perform a subsequent call process, and sends a call request (INVITE) response message (200 OK) to the UE A through the network, indicating that the call establishment is successful.

If the call bearer establishment in the new access network still fails, the UE B performs steps 502 to 510 again according to the operator policy or other conditions, or sends a call establishment failure response to the network and releases the call.

In the implementation of this embodiment, when failing to establish a call bearer in the original network (CS network), the user sends a failure notification to the network through the UPDATE message, and the network re-selects an access domain, thereby avoiding unnecessary call failure, and providing a higher probability for a successful call.

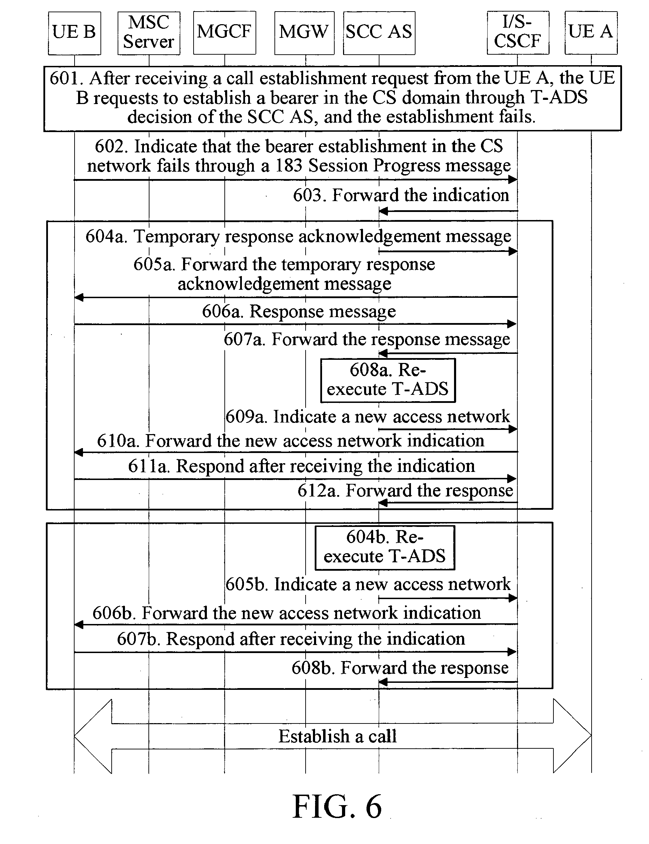

A fourth embodiment is provided by taking that the bearer establishment in the CS network fails as an example. The user indicates that the bearer establishment in the CS network fails through a 183 Session Progress message. FIG. 6 is a signaling flow diagram of the method according to this embodiment, which includes the following steps.

In step 601, after receiving a call from the UE A, the UE B attempts to establish a bearer in the CS domain through T-ADS decision of the SCC AS, and the bearer establishment fails.

In step 602, the UE B sends a 183 Session Progress message, which indicates that the bearer establishment fails, to the I/S-CSCF.

The failure of the CS bearer establishment is indicated through SDP parameters, for example,
c=PSTN - -
m=audio 0 PSTN -.

In step 603, the I/S-CSCF forwards the 183 Session Progress message to the SCC AS.

The SCC AS may send an access network update request to the UE in steps 604a to 612a or steps 604b to 608b. Specifically, steps 604a to 612a are as follows.

In step 604a, the SCC AS sends a temporary response acknowledgement message to the I/S-CSCF.

In step 605a, the I/S-CSCF forwards the temporary response acknowledgement message to the UE B.

In step 606a, the UE B sends a response message to the I/S-CSCF.

In step 607a, the I/S-CSCF forwards the response message to the SCC AS.

In step 608a, the SCC AS re-executes T-ADS to select a new access network.

The SCC AS may, for example, according to operator policy requirements, update T-ADS decision information of the network. The selected PS access network may be the current PS access network (i.e., the PS network for signaling transmission) or other PS access networks.

In step 609a, the SCC AS sends a new access network indication to the I/S-CSCF.

The UE B is instructed by using the SDP parameters to establish a call bearer through the PS network, for example,
c=IN IP6 3ffe:501:ffff1::1
m=audio 3456 RTP/AVP 0.

In step 610a, the I/S-CSCF forwards the new access network indication to the UE.

In step 611a, after receiving the new access network indication, the UE sends a response message to the I/S-CSCF.

In step 612a, the I/S-CSCF forwards the response message to the SCC AS.

Specifically, steps 604b to 608b are as follows.

In step 604b, the SCC AS re-executes T-ADS to select a new access network.

The SCC AS may, for example, according to operator policy requirements, update T-ADS decision information of the network. The selected PS access network may be the current PS access network (i.e., the PS network for signaling transmission) or other PS access networks.

In step 605b, the SCC AS sends a new access network indication to the I/S-CSCF.

The UE B is instructed by using the SDP parameters to establish a call bearer through the PS network, for example,
c=IN IP6 3ffe:501:ffff:1::1
m=audio 3456 RTP/AVP 0.

In step 606b, the I/S-CSCF forwards the new access network indication to the UE.

In step 607b, after receiving the new access network indication, the UE sends a response message to the I/S-CSCF.

In step 608b, the I/S-CSCF forwards the response message to the SCC AS.

After steps 612a and 608b, if the call bearer establishment in the new access network (PS network) is successful, the UE B continues to perform a subsequent call process, and sends a call request (INVITE) response message (200 OK) to the UE A through the network, indicating that the call establishment is successful.

If the call bearer establishment in the new access network still fails, the UE B performs steps 602 to 612a or steps 602 to 608b again according to the operator policy or other conditions, or sends a call establishment failure response to the network and releases the call.

In the implementation of this embodiment, when failing to establish a call bearer in the original network (CS network), the user sends a failure notification to the network through the 183 Session Progress message, and the network re-selects an access domain, thereby avoiding unnecessary call failure, and providing a higher probability for a successful call.

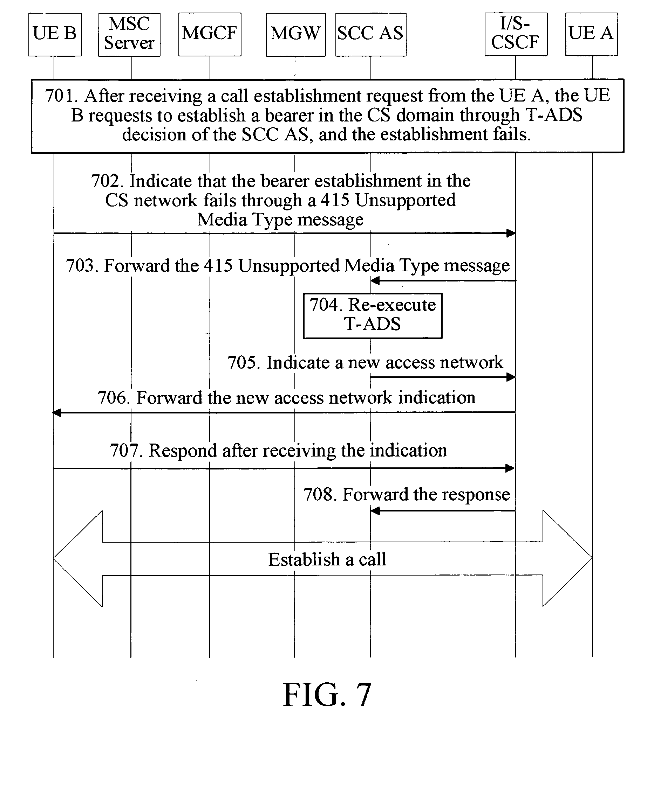

A fifth embodiment is provided by taking that the bearer establishment in the CS network fails as an example. The user indicates that the bearer establishment in the CS network fails through a 415 Unsupported Media Type message. FIG. 7 is a signaling flow diagram of the method according to this embodiment, which includes the following steps.

In step 701, after receiving a call from the UE A, the UE B attempts to establish a bearer in the CS domain through T-ADS decision of the SCC AS, and the bearer establishment fails.

In step 702, the UE B sends a 415 Unsupported Media Type message, which indicates that the bearer establishment fails, to the I/S-CSCF.

The failure of the CS bearer establishment is indicated through SDP parameters, for example,
c=PSTN - -
m=audio 0 PSTN -.

In step 703, the I/S-CSCF forwards the 415 Unsupported Media Type message to the SCC AS.

In step 704, the SCC AS re-executes T-ADS to select a PS access network to establish a call bearer.

The SCC AS may, for example, according to operator policy requirements, update T-ADS decision information of the network. The selected PS access network may be the current PS access network (that is, the PS network for signaling transmission) or other PS access networks.

In step 705, the SCC AS sends an INVITE message to the I/S-CSCF to indicate a new access network.

The UE B is instructed by using the SDP parameters to establish a call bearer through the PS network, for example,
c=IN IP6 3ffe:501:ffff:1::1
m=audio 3456 RTP/AVP 0.

In step 706, the I/S-CSCF forwards new access domain network information.

In step 707, after receiving the new access domian network information, the UE B sends a response message to the I/S-CSCF.

In step 708, the I/S-CSCF forwards the response message.

After step 708, if the call bearer establishment in the new access network (PS network) is successful, the UE B continues to perform a subsequent call process, and sends a call request (INVITE) response message (200 OK) to the UE A through the network, indicating that the call establishment is successful.

If the call bearer establishment in the new access network still fails, the UE B performs steps 702 to 708 again according to the operator policy or other conditions, or sends a call establishment failure response to the network and releases the call.

In the implementation of this embodiment, when failing to establish a call bearer in the original network (CS network), the user sends a failure notification to the network through the 415 Unsupported Media Type message, and the network re-selects an access domain, thereby avoiding unnecessary call failure, and providing a higher probability for a successful call.

The 415 Unsupported Media Type message may be replaced with other failure indication response messages (e.g., a 503 Service Unavailable message).

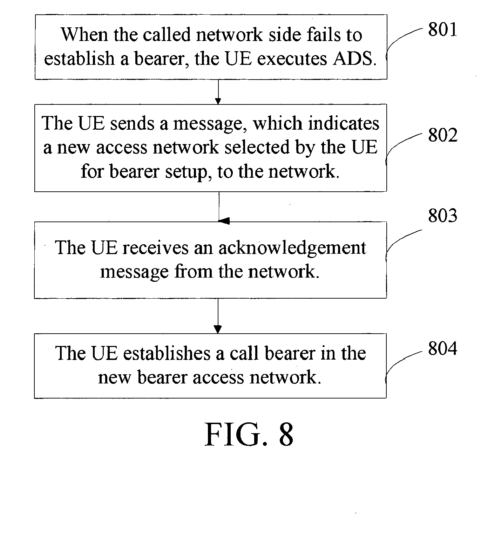

In a sixth embodiment, after the network fails to establish a bearer, the UE executes the function of assisting T-ADS, and changes a bearer access network after the network acknowledges. Referring to FIG. 8, a method according to this embodiment specifically includes the following steps.

In step 801, after the current called network side fails to establish a bearer, the UE executes network ADS.

In step 802, the UE sends a notification message, which indicates a new access network selected by the UE for bearer setup, to the network.

In step 803, the UE receives an acknowledgement message from the network.

In step 804, the UE establishes a call bearer in the new bearer access network.

After step 802, the method further includes the following step.

The network executes T-ADS, determines a new bearer access network, and sends an acknowledgement message to the UE.

After step 802, step 803, or step 804, the method further includes: updating T-ADS decision information of the network side.

In step 802, the user may send a new network access request through various messages such as UPDATE or 183 Session Progress message, or 415 Unsupported Media Type message.

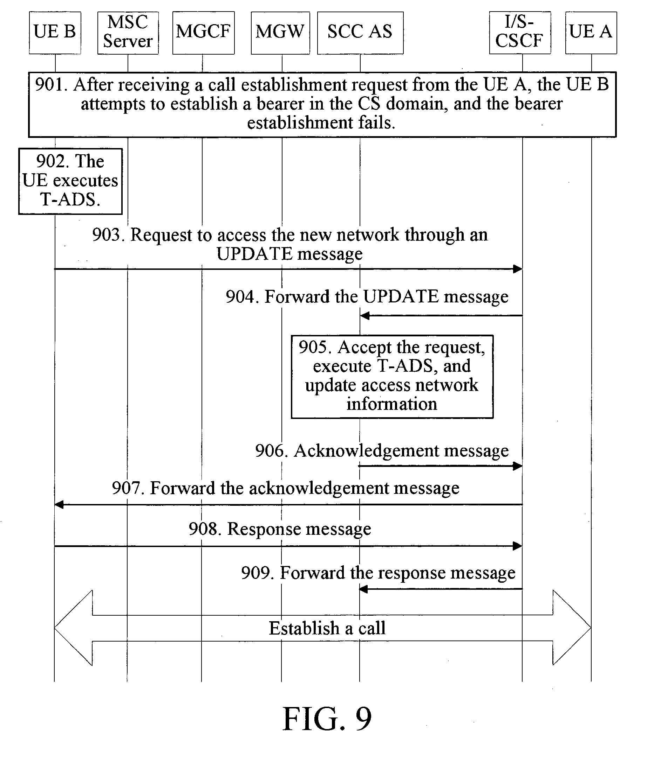

FIG. 9 is a signaling flow diagram of sending a new network access request with UPDATE. The method according to this embodiment is described by taking that the bearer establishment in the CS network fails as an example, which includes the following steps.

In step 901, after receiving a call from the UE A, the UE B attempts to establish a bearer in the CS domain, and the bearer establishment fails.

In step 902, the UE B executes T-ADS, and determines whether to use another access network (such as a PS network) to establish a bearer that satisfies the service requirements.

In step 903, after determining to use another access network to establish a new bearer, the UE B sends an UPDATE message to the I/S-CSCF to request to access the new network.

A new access network is indicated through SDP parameters, and the selected access network may be the current PS access network (i.e., the PS network for signaling transmission) or other PS access networks.

In step 904, the I/S-CSCF forwards the UPDATE message to the SCC AS.

In step 905, the SCC AS receives the request, executes T-ADS, and updates access network information.

The SCC AS may, for example, according to operator policy requirements, update T-ADS decision information of the network. The selected PS access network may be the current PS access network (i.e., the PS network for signaling transmission) or other PS access networks.

In step 906, the SCC AS sends an acknowledgement message to the I/S-CSCF.

In step 907, the I/S-CSCF forwards the acknowledgement message.

In step 908, after receiving the acknowledgement message, the UE B sends a response message to the I/S-CSCF.

In step 909, the I/S-CSCF forwards the response message to the SCC AS.

After step 909, if the call bearer establishment in the new access network (PS network) is successful, the UE B continues to perform a subsequent call process, and sends a call request (INVITE) response message (200 OK) to the UE A through the network, indicating that the call establishment is successful.

If the call bearer establishment in the new access network still fails, the UE B performs steps 902 to 909 again according to the operator policy or other conditions, or sends a call establishment failure response to the network and releases the call.

In the implementation of this embodiment, when failing to establish a call bearer in the original network (CS network), the user executes T-ADS, and sends an access domain change request to the network when a new network is available. The network receives the request and updates the access network, and the user establishes a call bearer in the new access network, thereby avoiding unnecessary call failure, and providing a higher probability for a successful call.

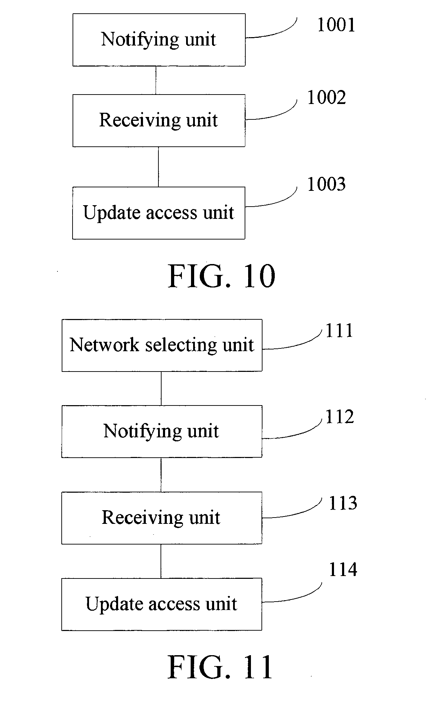

A first embodiment of a device is corresponding to the above embodiment of the method. In this embodiment, the present invention provides a device for called access, where the device is disposed in a UE, and capable of sending a notification message to the network when a call bearer establishment fails, receiving updated access domain network information after the network updates the access domain network, and establishing a call bearer in the new access domian network. Referring to FIG. 10, the device includes a notifying unit 1001, a receiving unit 1002, and an update access unit 1003.

The notifying unit 1001 is configured to send a message, which indicates that bearer establishment fails, to a network.

The receiving unit 1002 is configured to receive a message, which indicates information of a new bearer access network and is sent by the network.

The update access unit 1003 is configured to establish a bearer in the new bearer access network according to the message sent by the network.

Referring to FIG. 11, in a second embodiment of the device, the present invention provides another device for called access, where the device is disposed in a UE, and capable of executing T-ADS when a call bearer establishment fails, sending an establishment request to the network when another access network can be used to establish a bearer, and establishing a call bearer in the new access network after being allowed by the network. The device includes a network selecting unit 111, a notifying unit 112, a receiving unit 113, and an update access unit 114.

The network selecting unit 111 is configured to execute T-ADS when bearer establishment fails.

The notifying unit 112 is configured to send a message, which indicates that a bearer needs to be established in a new bearer access network, to the network.

The receiving unit 113 is configured to receive an acknowledgement message from the network.

The update access unit 114 is configured to establish a bearer in the new bearer access network.

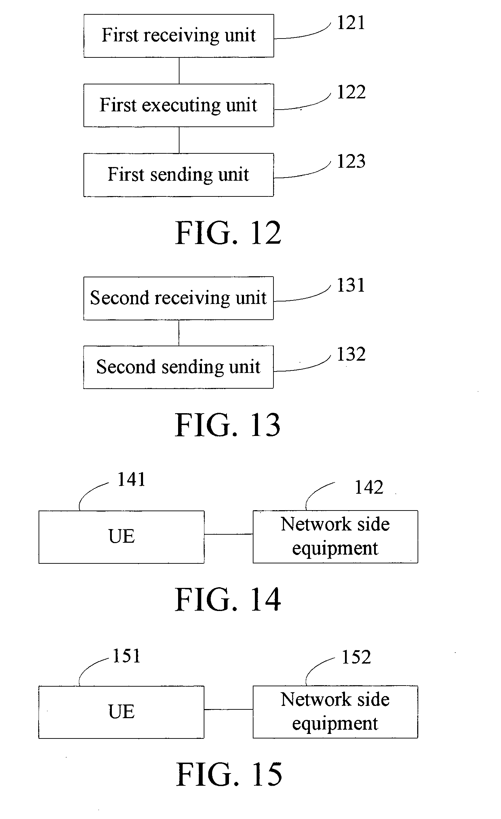

Referring to FIG. 12, in a third embodiment of the device, the present invention provides another device for called access, where the device is disposed at a network side, and capable of receiving bearer failure information from a called side when a call bearer establishment fails, re-executing ADS, and sending the new access network to a called terminal. The device includes a first receiving unit 121, a first executing unit 122, and a first sending unit 123.

The first receiving unit 121 is configured to receive, in the case of a bearer establishment failure, a message, which indicates that bearer establishment fails and is sent by a user.

The first executing unit 122 is configured to execute T-ADS to select a new bearer access network.

The first sending unit 123 is configured to send a message, which indicates information of the new bearer access network, to the user.

Preferably, the device according to this embodiment further includes an update unit.

The update unit is configured to update T-ADS decision information of the network side.

Referring to FIG. 13, according to a fourth embodiment of the device, the present invention provides another device for called access, where the device is disposed at a network side, and capable of receiving a new network access request from a called terminal when a call bearer establishment fails and sending an acknowledgement message to a UE. The device includes a second receiving unit 131 and a second sending unit 132.

The second receiving unit 131 is configured to receive a message, which indicates that a bearer needs to be established in a new bearer access network and is sent by the UE.

The second sending unit 132 is configured to send an acknowledgement message to the UE.

Preferably, the device further includes a second executing unit.

The second executing unit is configured to execute T-ADS to determine a new bearer access network.

Preferably, the device of this embodiment further includes an update unit.

The update unit is configured to update T-ADS decision information of the network side.

In a first embodiment of a system, the present invention provides a system for changing an access domain of a called UE. Referring to FIG. 14, the system includes a UE 141 and a network side equipment 142.

The UE 141 is configured to, when a called network side fails to establish a bearer, send information, which indicates that bearer establishment fails, to a network, and receive a message, which indicates information of a new bearer access network and is sent by the network; and establish a bearer in the new bearer access network according to the message, which indicates information of the new bearer access network.

The network side equipment 142 is configured to receive, when the called network side fails to establish a bearer, a message, which indicates that the bearer establishment fails, execute T-ADS to select a new access network, and send a message, which indicates information of the new bearer access network, to the user.

Preferably, the network side equipment 142 provided in the system according to this embodiment is configured to update T-ADS decision information of the network side.

In a second embodiment of the system, the present invention provides another system for changing an access domain of a UE. Referring to FIG. 15, the system includes a UE 151 and a network side equipment 152.

The UE 151 is configured to execute T-ADS to select an undetermined new bearer access network when a called network side fails to establish a bearer, send a message requesting to establish a bearer in the undetermined new bearer access network to the network, receive an acknowledgement message from the network, and establish a bearer in the new bearer access network.

The network side equipment 152 is configured to receive a message, which indicates that a bearer needs to be established in the new bearer access network and is sent by the UE 151, and send an acknowledgement message to the UE; and execute T-ADS to determine a new bearer access network.

Preferably, the network side equipment 152 provided in the system of this embodiment is configured to update T-ADS decision information of the network side.

It should be noted that the above descriptions are merely some exemplary embodiments of the present invention, and those skilled in the art may make various improvements and refinements without departing from the principle of the invention. The present invention is defined by the appended claims.

## Claims

1. A method for bearer establishment for a called party in an IMS centralized service, ICS, network, the called party being an ICS user equipment, ICS UE, the method comprising:
receiving (502/503, 602/603, 702/703), by a service centralization and continuity application server, SCC AS, a message, which indicates that bearer establishment fails and is sent by the ICS UE;
executing (506, 608a, 604b, 704), by the SCC AS, terminating access domain selection, T-ADS, to select a new access network for bearer establishment; and
sending (507/508, 609a/610a, 605b/606b, 705/706), by the SCC AS, a message, which indicates information of the new access network for bearer establishment, to the ICS UE.

2. The method according to claim 1, further comprising:
updating, by the SCC AS, T-ADS decision information of a network side according to the message sent by the ICS UE.

3. The method according to claim 1, wherein the message, which indicates information of the new access network for bearer establishment, comprises an UPDATE message or an INVITE message; and the message, which indicates that the bearer establishment fails, comprises an UPDATE message, a 183 Session Progress message, or a 415 Unsupported Media Type message.

4. The method according to claim 1, wherein the message, which indicates that the bearer establishment fails, indicates the failure of the bearer establishment through Session Description Protocol, SDP, parameters; and
the message, which indicates the information of the new access network for bearer establishment, indicates, through the SDP parameters, that a bearer needs to be established in the new access network for bearer establishment.

5. The method according to any one of claims 1 to 4, wherein the new access network for bearer establishment comprises a circuit switched, CS, network or a packet switched, PS, network.

6. A method for bearer establishment for a called party in an IMS centralized service, ICS, network, the called party being an ICS user equipment, ICS UE, the method comprising:
when a current access network fails (901) to establish a bearer, executing (902), by the ICS UE, terminating access domain selection, T-ADS, to select a new access network for bearer establishment; and
sending (903, 904) by the ICS UE, a message, which indicates that a bearer needs to be established in the new access network for bearer establishment, to a service centralization and continuity application server, SCCAS.

7. The method according to claim 6, wherein after the sending, by the ICS UE, the message, which indicates that a bearer needs to be established in the new access network for bearer establishment, to the SCC AS, the method further comprises:
executing (905), by the SCC AS, T-ADS, and sending (906, 907) an acknowledgement message to the ICS UE to acknowledge establishing a bearer in the new access network for bearer establishment.

8. The method according to claim 7, wherein the message, which indicates that a bearer needs to be established in the new access network for bearer establishment, indicates the establishment of a bearer in the new access network for bearer establishment through Session Description Protocol, SDP, parameters; and
the acknowledgement message indicates the acknowledgement through the SDP parameters.

9. The method according to claim 6, wherein the message, which indicates that a bearer needs to be established in the new access network for bearer establishment, comprises an UPDATE message, a 183 Session Progress message, or a 415 Unsupported Media Type message.

10. The method according to claim 6, further comprising:
updating, by the SCC AS, T-ADS decision information of a network side according to the message sent by the ICS UE.

11. The method according to any one of claims 6 to 10, wherein the new access network for bearer establishment comprises a circuit switched, CS, network or a packet switched, PS, network.

12. An IMS centralized service ICS user equipment, ICS UE, comprising:
a notifying unit, configured to send a message, which indicates that bearer establishment fails, to a service centralization and continuity application server, SCC AS;
a receiving unit, configured to receive a message, which indicates information of a new access network for bearer establishment and is sent by the SCC AS, wherein the new access network for bearer establishment having been selected by T-ADS execution of the SCC AS; and
an update access unit, configured to establish a bearer in the new access network for bearer establishment according to the message sent by the SCC AS.

13. An IMS centralized service ICS user equipment, ICS UE, comprising:
a network selecting unit, configured to execute terminating access domain selection, T-ADS, when bearer establishment fails;
a notifying unit, configured to send a message, which indicates that a bearer needs to be established in a new access network for bearer establishment, to a service centralization and continuity application server, SCC AS;
a receiving unit, configured to receive an acknowledgement message from the SCC AS; and
an update access unit, configured to establish a bearer in the new access network for bearer establishment.

14. A service centralization and continuity application server, SCC AS, comprising:
a first receiving unit, configured to receive, in the case of a bearer establishment failure, a message, which indicates that bearer establishment fails and is sent by an IMS centralized service user equipment, ICS UE;
a first executing unit, configured to execute terminating access domain selection, T-ADS, to select a new access network for bearer establishment; and
a first sending unit, configured to send a message, which indicates information of the new access network for bearer establishment, to the ICS UE.

15. The SCC AS according to claim 14, further comprising:
an update unit, configured to update T-ADS decision information of the network side.

16. A service centralization and continuity application server, SCC AS, comprising:
a second receiving unit, configured to receive a message, which indicates that a bearer needs to be established in a new access network for bearer establishment and is sent by an IMS centralized service user equipment, ICS UE, when the current access network fails to establish the bearer, wherein the new access network for bearer establishment having bee selected by T-ADS execution at the ICS UE; and
a second sending unit, configured to send an acknowledgement message to the ICS UE.

17. The SCC AS according to claim 16, further comprising:
a second executing unit, configured to execute terminating access domain selection, T-ADS, to determine a new access network for bearer establishment.

18. The SCC AS according to claim 16 or 17, further comprising:
an update unit, configured to update T-ADS decision information of the network side.

19. A system for bearer establishment for a called party in an IMS centralized service, ICS, network, comprising:
an ICS user equipment, ICS UE, according to claim 12, and a service centralization and continuity application server, SCC AS, according to claim 14 or claim 15.

20. A system for bearer establishment for a called party in an IMS centralized service, ICS, network, comprising:
an ICS user equipment, ICS UE, according to claim 13, and a service centralization and continuity application server, SCC AS, according to any one of claim 16-18.

## Patentansprüche

1. Verfahren für den Trägeraufbau für einen angerufenen Teilnehmer in einem IMS-zentralisierten Dienstnetz, ICS-Netz, wobei der angerufene Teilnehmer ein ICS-Anwendergerät, ICS UE, ist, wobei das Verfahren Folgendes umfasst:
Empfangen (502/503, 602/603, 702/703) durch einen Dienstzentralisierungs- und Dienstkontinuitäts-Anwendungsserver, SCC AS, einer Nachricht, die angibt, dass der Trägeraufbau scheitert, und die von dem ICS UE gesendet wird;
Ausfiihren (506, 608a, 604b, 704) durch den SCC AS einer Abschluss-Zugriffsdomänenauswahl, T-ADS, um ein neues Zugriffsnetz für den Trägeraufbau auszuwählen; und
Senden (507/508, 609a/610a, 605b/606b, 705/706) durch den SCC AS einer Nachricht, die Informationen über das neue Zugriffsnetz für den Trägeraufbau angibt, zu dem ICS UE.

2. Verfahren nach Anspruch 1, das ferner Folgendes umfasst:
Aktualisieren durch den SCC AS von T-ADS-Entscheidungsinformationen einer Netzseite in Übereinstimmung mit der durch das ICS UE gesendeten Nachricht.

3. Verfahren nach Anspruch 1, wobei die Nachricht, die Informationen über das neue Zugriffsnetz für den Trägeraufbau angibt, eine UPDATE-Nachricht oder eine INVITE-Nachricht umfasst; und die Nachricht, die angibt, dass der Trägeraufbau scheitert, eine UPDATE-Nachricht, eine 183-Sitzungsfortschrittsnachricht oder eine 415-Nachricht für nicht unterstützten Medientyp umfasst.

4. Verfahren nach Anspruch 1, wobei die Nachricht, die angibt, dass der Trägeraufbau scheitert, das Scheitern des Trägeraufbaus durch Sitzungsbeschreibungsprotokoll-Parameter, SDP-Parameter, angibt; und
die Nachricht, die die Informationen über das neue Zugriffsnetz für den Trägeraufbau angibt, durch die SDP-Parameter angibt, dass ein Träger in dem neuen Zugriffsnetz für den Trägeraufbau aufgebaut werden muss.

5. Verfahren nach einem der Ansprüche 1 bis 4, wobei das neue Zugriffsnetz für den Trägeraufbau ein schaltungsvermitteltes Netz, CS-Netz, oder ein paketvermitteltes Netz, PS-Netz, umfasst.

6. Verfahren zum Trägeraufbau für einen angerufenen Teilnehmer in einem IMS-zentralisierten Dienstnetz, ICS-Netz, wobei der angerufene Teilnehmer ein ICS-Anwendergerät, ICS UE, ist, wobei das Verfahren Folgendes umfasst:
wenn ein aktuelles Zugriffsnetz beim Aufbauen eines Trägers scheitert (901), Ausführen (902) durch das ICS UE einer Abschluss-Zugriffsdomänenauswahl, T-ADS, um ein neues Zugriffsnetz für den Trägeraufbau auszuwählen; und
Senden (903, 904) durch das ICS UE einer Nachricht, die angibt, dass ein Träger in dem neuen Zugriffsnetz für den Trägeraufbau aufgebaut werden muss, zu einem Dienstzentralisierungs- und Dienstkontinuitäts-Anwendungsserver, SCC AS.

7. Verfahren nach Anspruch 6, wobei nach dem Senden durch das ICS UE der Nachricht, die angibt, dass in dem neuen Zugriffsnetz für den Trägeraufbau ein Träger aufgebaut werden muss, zu dem SCC AS das Verfahren ferner Folgendes umfasst:
Ausführen (905) durch den SCC AS der T-ADS und Senden (906, 907) einer Quittierungsnachricht zu dem ICS UE, um den Aufbau eines Trägers in dem neuen Zugriffsnetz für den Trägeraufbau zu quittieren.

8. Verfahren nach Anspruch 7, wobei die Nachricht, die angibt, dass in dem neuen Zugriffsnetz für den Trägeraufbau ein Träger aufgebaut werden muss, den Aufbau eines Trägers in dem neuen Zugriffsnetz für den Trägeraufbau durch Sitzungsbeschreibungsprotokoll-Parameter, SDP-Parameter, angibt; und
die Quittierungsnachricht die Quittierung durch die SDP-Parameter angibt.

9. Verfahren nach Anspruch 6, wobei die Nachricht, die angibt, dass in dem neuen Zugriffsnetz für den Trägeraufbau ein Träger aufgebaut werden muss, eine UPDATE-Nachricht, eine 183-Sitzungsfortschrittsnachricht oder eine 415-Nachricht für nicht unterstützten Medientyp umfasst.

10. Verfahren nach Anspruch 6, das ferner Folgendes umfasst:
Aktualisieren durch den SCC AS der T-ADS-Entscheidungsinformationen einer Netzseite in Übereinstimmung mit der durch das ICS UE gesendeten Nachricht.

11. Verfahren nach einem der Ansprüche 6 bis 10, wobei das neue Zugriffsnetz für den Trägeraufbau ein schaltungsvermitteltes Netz, CS-Netz, oder ein paketvermitteltes Netz, PS-Netz, umfasst.

12. Anwendergerät für IMS-zentralisierten Dienst, ICS, ICS UE, das Folgendes umfasst:
eine Meldeeinheit, die konfiguriert ist, eine Nachricht, die angibt, dass ein Trägeraufbau scheitert, zu einem Dienstzentralisierungs- und Dienstkontinuitäts-Anwendungsserver, SCC AS, zu senden;
eine Empfangseinheit, die konfiguriert ist, eine Nachricht, die Informationen über ein neues Zugriffsnetz für den Trägeraufbau angibt und durch den SCC AS gesendet wird, zu empfangen, wobei das neue Zugriffsnetz für den Trägeraufbaus durch die T-ADS-Ausführung bei dem SCC AS gewählt worden ist; und
eine Aktualisierungszugriffseinheit, die konfiguriert ist, einen Träger in dem neuen Zugriffsnetz für den Trägeraufbau in Übereinstimmung mit der durch den SCC AS gesendeten Nachricht aufzubauen.

13. Anwendergerät für IMS-zentralisierten Dienst, ICS, ICS UE, das Folgendes umfasst:
eine Netzauswahleinheit, die konfiguriert ist, eine Abschluss-Zugriffsdomänenauswahl, T-ADS, auszuführen, wenn ein Trägeraufbau scheitert;
eine Meldeeinheit, die konfiguriert ist, eine Nachricht, die angibt, dass ein Träger in einem neuen Zugriffsnetz für den Trägeraufbau aufgebaut werden muss, zu einem Dienstzentralisierungs- und Dienstkontinuitäts-Anwendungsserver, SCC AS, zu senden;
eine Empfangseinheit, die konfiguriert ist, um eine Quittierungsnachricht von dem SCC AS zu empfangen; und
eine Aktualisierungszugriffseinheit, die konfiguriert ist, einen Träger in dem neuen Zugriffsnetz für den Trägeraufbau aufzubauen.

14. Dienstzentralisierungs- und Dienstkontinuitäts-Anwendungsserver, SCC AS, der Folgendes umfasst:
eine erste Empfangseinheit, die konfiguriert ist, im Fall eines Scheitems eines Trägeraufbaus eine Nachricht, die angibt, dass der Trägeraufbau scheitert, und von einem Anwendergerät für IMS-zentralisierten Dienst, ICS UE, gesendet wird, zu empfangen;
eine erste Ausführungseinheit, die konfiguriert ist, eine Abschluss-Zugriffsdomänenauswahl, T-ADS, auszuführen, um ein neues Zugriffsnetz für den Trägeraufbau auszuwählen; und
eine erste Sendeeinheit, die konfiguriert ist, eine Nachricht, die Informationen über das neue Zugriffsnetz für den Trägeraufbau angibt, zu dem ICS UE zu senden.

15. SCC AS nach Anspruch 14, der ferner Folgendes umfasst:
eine Aktualisierungseinheit, die konfiguriert ist, T-ADS-Entscheidungsinformationen auf der Netzseite zu aktualisieren.

16. Dienstzentralisierungs- und Dienstkontinuitäts-Anwendungsserver, SCC AS, der Folgendes umfasst:
eine zweite Empfangseinheit, die konfiguriert ist, eine Nachricht, die angibt, dass in einem neuen Zugriffsnetz für den Trägeraufbau ein Träger aufgebaut werden muss,
und von einem Anwendergerät für IMS-zentralisierten Dienst, ICS UE, gesendet wird, zu empfangen, wenn das aktuelle Zugriffsnetz beim Aufbau des Trägers scheitert, wobei das neue Zugriffsnetz für den Trägeraufbau durch die T-ADS-Ausführung bei dem ICS UE ausgewählt worden ist; und
eine zweite Sendeeinheit, die konfiguriert ist, eine Quittierungsnachricht zu dem ICS UE zu senden.

17. SCC AS nach Anspruch 16, der ferner Folgendes umfasst:
eine zweite Ausführungseinheit, die konfiguriert ist, eine Abschluss-Zugriffsdomänenauswahl, T-ADS, auszuführen, um ein neues Zugriffsnetz für den Trägeraufbau zu bestimmen.

18. SCC AS nach Anspruch 16 oder 17, der ferner Folgendes umfasst:
eine Aktualisierungseinheit, die konfiguriert ist, um T-ADS-Entscheidungsinformationen der Netzseite zu aktualisieren.

19. System für den Trägeraufbau für einen angerufenen Teilnehmer in einem IMS-zentralisierten Dienstnetz, ICS-Netz, das Folgendes umfasst:
ein ICS-Anwendergerät, ICS UE, nach Anspruch 12 und einen Dienstzentralisierungs- und Dienstkontinuitäts-Anwendungsserver, SCC AS, nach Anspruch 14 oder Anspruch 15.

20. System für den Trägeraufbau für einen angerufenen Teilnehmer in einem IMS-zentralisierten Dienstnetz, ICS-Netz, das Folgendes umfasst:
ein ICS-Anwendergerät, ICS UE, nach Anspruch 13 und einen Dienstzentralisierungs- und Dienstkontinuitäts-Anwendungsserver, SCC AS, nach einem der Ansprüche 16-18.

## Revendications

1. Procédé d'établissement de support pour un appelé dans un réseau de services centralisés IMS, ICS, l'appelé étant un équipement utilisateur ICS, ICS UE, le procédé comprenant :
la réception (502/503, 602/603, 702/703), par un serveur d'application de centralisation et de continuité de services, SCC AS, d'un message, lequel indique que l'établissement de support a échoué et est envoyé par l'ICS UE ;
l'exécution (506, 608a, 604b, 704), par le SCC AS, d'une sélection de domaine d'accès de terminaison, T-ADS, pour sélectionner un nouveau réseau d'accès d'établissement de support ; et
l'envoi (507/508, 609a/610a, 605b/606b, 705/706), par le SCC AS, d'un message, lequel indique des informations du nouveau réseau d'accès d'établissement de support, à l'ICS UE.

2. Procédé selon la revendication 1, comprenant en outre :
l'actualisation, par le SCC AS, d'informations de décision T-ADS d'un côté réseau en fonction du message envoyé par l'ICS UE.

3. Procédé selon la revendication 1, dans lequel le message, qui indique des informations du nouveau réseau d'accès d'établissement de support, comprend un message UPDATE (actualiser) ou un message INVITE (inviter), et le message, qui indique que l'établissement du support a échoué, comprend un message UPDATE, un message 183 Session Progress (progression de session 183), ou un message 415 Unsupported Media Type (type de média non supporté 415).

4. Procédé selon la revendication 1, dans lequel le message, qui indique que l'établissement du support a échoué, indique l'échec de l'établissement du support par le biais de paramètres de Protocole de Description de Session, SDP ; et
le message, qui indique les informations du nouveau réseau d'accès d'établissement de support, indique, par le biais des paramètres SDP, qu'un support doit être établi dans le nouveau réseau d'accès d'établissement de support.

5. Procédé selon l'une quelconque des revendications 1 à 4, dans lequel le nouveau réseau d'accès d'établissement de support comprend un réseau commuté par circuits, CS, ou un réseau commuté par paquets, PS.

6. Procédé d'établissement de support pour un appelé dans un réseau de services centralisés IMS, ICS, l'appelé étant un équipement utilisateur ICS, ICS UE, le procédé comprenant :
quand un réseau d'accès courant ne réussit pas (901) à établir un support, l'exécution (902), par l'ICS UE, d'une sélection de domaine d'accès de terminaison, T-ADS, pour sélectionner un nouveau réseau d'accès d'établissement du support ; et
l'envoi (903, 904), par l'ICS UE, d'un message, lequel indique qu'un support doit être établi dans le nouveau réseau d'accès d'établissement de support, à un serveur d'application de centralisation et de continuité de services, SCC AS.

7. Procédé selon la revendication 6, comprenant en outre après l'envoi, par l'ICS UE, du message, lequel indique qu'un support doit être établi dans le nouveau réseau d'accès d'établissement de support, au SCC AS :
l'exécution (905) par le SCC AS, d'une T-ADS, et l'envoi (906, 907) d'un message d'acquittement à l'ICS UE pour acquitter l'établissement d'un support dans le nouveau réseau d'accès d'établissement de support.

8. Procédé selon la revendication 7, dans lequel le message, qui indique qu'un support doit être établi dans le nouveau réseau d'accès d'établissement de support, indique l'établissement d'un support dans le nouveau réseau d'accès d'établissement de support par le biais de paramètres de Protocole de Description de Session, SDP ; et
le message d'acquittement indique l'acquittement par le biais des paramètres SDP.

9. Procédé selon la revendication 6, dans lequel le message, qui indique qu'un support doit être établi dans le nouveau réseau d'accès d'établissement de support, comprend un message UPDATE (actualiser), un message 183 Session Progress (progression de session 183), ou un message 415 Unsupported Media Type (type de média non supporté 415).

10. Procédé selon la revendication 6, comprenant en outre :
l'actualisation, par le SCC AS, d'informations de décision T-ADS d'un côté réseau en fonction du message envoyé par l'ICS UE.

11. Procédé selon l'une quelconque des revendications 6 à 10, dans lequel le nouveau réseau d'accès d'établissement de support comprend un réseau commuté par circuits, CS, ou un réseau commuté par paquets, PS.

12. Equipement utilisateur de services centralisés IMS, ICS, soit ICS UE, comprenant :
une unité de notification, configurée pour envoyer un message, lequel indique que l'établissement de support a échoué, à un serveur d'application de centralisation et de continuité de services, SCC AS ;
une unité de réception, configurée pour recevoir un message, lequel indique des informations d'un nouveau réseau d'accès d'établissement de support et est envoyé par le SCC AS, dans lequel le nouveau réseau d'accès d'établissement de support a été sélectionné par l'exécution de la T-ADS au niveau du SCC AS ; et
une unité d'actualisation d'accès, configurée pour établir un support dans le nouveau réseau d'accès d'établissement de support en fonction du message envoyé par le SCC AS.

13. Equipement utilisateur de services centralisés IMS, ICS, soit ICS UE, comprenant :
une unité de sélection de réseau, configurée pour exécuter une sélection de domaine d'accès de terminaison, T-ADS, quand l'établissement de support échoue ;
une unité de notification, configurée pour envoyer un message, lequel indique qu'un support doit être établi dans un nouveau réseau d'accès d'établissement du support, à un serveur d'application de centralisation et de continuité de services, SCC AS ;
une unité de réception, configurée pour recevoir un message d'acquittement depuis le SCC AS ; et
une unité d'actualisation d'accès, configurée pour établir un support dans le nouveau réseau d'accès d'établissement de support.

14. Serveur d'application de centralisation et de continuité de services, SCC AS, comprenant :
une première unité de réception, configurée pour recevoir, dans le cas d'un échec d'établissement de support, un message, lequel indique que l'établissement de support a échoué et est envoyé par un équipement utilisateur de services centralisés IMS, ICS UE;
une première unité d'exécution, configurée pour exécuter une sélection de domaine d'accès de terminaison, T-ADS, pour sélectionner un nouveau réseau d'accès d'établissement de support ; et
une première unité d'envoi, configurée pour envoyer un message, lequel indique des informations du nouveau réseau d'accès d'établissement de support, à l'ICS UE.

15. SCC AS selon la revendication 14, comprenant en outre :
une unité d'actualisation, configurée pour actualiser des informations de décision T-ADS du côté réseau.

16. Serveur d'application de centralisation et de continuité de services, SCC AS, comprenant :
une seconde unité de réception, configurée pour recevoir un message, lequel indique qu'un support doit être établi dans un nouveau réseau d'accès d'établissement de support et est envoyé par un équipement utilisateur de services centralisés IMS, ICS UE, quand le réseau d'accès courant ne réussit pas à établir le support, dans lequel le nouveau réseau d'accès d'établissement de support a été sélectionné par l'exécution d'une T-ADS au niveau de l'ICS UE ; et
une seconde unité d'envoi, configurée pour envoyer un message d'acquittement à l'ICS UE.

17. SCC AS selon la revendication 16, comprenant en outre :
une seconde unité d'exécution, configurée pour exécuter une sélection de domaine d'accès de terminaison, T-ADS, pour déterminer un nouveau réseau d'accès d'établissement de support.

18. SCC AS selon la revendication 16 ou 17, comprenant en outre :
une unité d'actualisation, configurée pour actualiser des informations de décision de T-ADS du côté réseau.

19. Système d'établissement de support pour un appelé dans un réseau de services centralisés IMS, ICS, comprenant :
un équipement utilisateur ICS, ICS UE, selon la revendication 12, et un serveur de centralisation et de continuité de services, SCC AS, selon la revendication 14 ou la revendication 15.

20. Système d'établissement de support pour un appelé dans un réseau de services centralisés IMS, ICS, comprenant :
un équipement utilisateur ICS, ICS UE, selon la revendication 13, et un serveur de centralisation et de continuité de services, SCC AS, selon l'une quelconque des revendications 16 à 18.
